# EUROPEAN PATENT SPECIFICATION

(11) **EP 3 220 041 B1**
(45) Date of publication and mention of the grant of the patent: **29.04.2020**
(21) Application number: 17158846.0
(22) Date of filing: 02.03.2017
(51) Int. Cl.: F17C 13/00, F17C 13/02, F17C 13/04

(54) **A PNEUMATIC EMERGENCY SHUTDOWN SYSTEM**
EIN PNEUMATISCHES SICHERHEITSSYSTEM
UN SYSTÈME PNEUMATUIQUE DE SECURITÉ

(30) Priority: 03.03.2016 FI 20165171
(43) Date of publication of application: 20.09.2017
(73) Proprietor: Skangas AS, 4056 Tananger (NO)
(72) Inventor: Heikka, Matti, 4056 Tananger (NO); Winberg, Bo, 4056 Tananger (NO)
(74) Representative: Kolster Oy Ab

(56) References cited:
- EP-A2- 1 452 794
- EP-A2- 2 062 850
- US-A1- 2009 071 171
- US-B1- 6 260 568

## Description

### FIELD OF THE INVENTION

The present invention relates to a pneumatic emergency shutdown system for a liquefied gas supply arrangement, and more particularly to a pneumatic emergency shutdown system as defined in the independent claim 1.

### BACKGROUND OF THE INVENTION

The invention relates to a pneumatic emergency shutdown system and particularly to a pneumatic emergency shutdown system for a liquefied gas supply arrangement in which liquefied gas is supplied between a first tank and a second tank such as a delivering truck and a receiving vessel and/or a receiving terminal or liquefied gas storage tank. The system is a pneumatic safety arrangement for preventing human errors occurring in the loading and unloading liquefied gas in particularly liquefied natural gas ("LNG"). The system is automated.

An emergency shutdown system is typically known as an emergency shutdown valve and an associated valve actuator, i.e. a valve that stops flow in an emergency. An emergency shutdown system is a requirement for the carriage of liquefied gases.

Growth of the truck deliveries of liquefied gas, for example LNG, has brought up many safety issues and there is a need for an automated ESD-link between the truck and the receiving vessel. Previously there has been no other link between the truck and the receiving vessel other than a human link. In case of an emergency, when the emergency shutdown system is activated in the receiving vessel, there is no existing automated system that transfers the emergency shutdown system signal to the delivering truck and launches the truck's own emergency shutdown system. The way to inform the driver about the activated emergency shutdown system in the receiving vessel insist the action from the user which leads to a possibility of the human error being present.

Publication US 6622758 discloses a pressure sensing line that detects the cryogenic liquid pressure at the off-loading port of a dispensing station. The off-loading port connects the tank of a delivery vehicle. Each of the dispensing station valves is connectable to the off-loading port. Each valve is kept closed, if the cryogenic liquid pressure is below a preset level. The invention disclosed in the publication prevents cryogenic liquid spill in case of drive offs, controller error or failure in dispensing station valves. So the publication discloses a system for dispensing LNG from a delivery truck to a storage tank at a dispensing station. A device is disclosed which has an emergency shutdown valve which can be activated with a pneumatic signal from the far end of the supplying pipe closing the valve at the delivery truck. In the publication the pneumatic signal controlling the valve is activated simply by detecting a drop in pressure in the supplying pipe which is not a signal of an ESD system of the receiving party. Also the receiving party is a storage tank which does not have an ESD system.

The present invention eliminates the human error possibility from the delivery chain between the delivering and receiving vessels. It also minors the danger zones needed for unloading/loading the liquefied gas, for example LNG, because the automated system diminishes the amount of released/leaked liquefied gas in case of total emergency.

Related prior art has been disclosed in documents EP 1452794 A2 and US 6260568 B1.

### BRIEF DESCRIPTION OF THE INVENTION

An object of the present invention is to provide a pneumatic emergency shutdown system so as to solve the above problems. The objects of the invention are achieved by the pneumatic emergency shutdown system which is characterized by what is stated in the independent claim. The preferred embodiments of the invention are disclosed in the dependent claims.

The invention is based on the idea of providing a pneumatically operated emergency shutdown system for preventing a human error when liquefied gas is supplied between two tanks. According to the invention liquefied gas, such as LNG, is transferred between a first tank and a second tank. The transfer can for example be arranged between a delivery truck comprising a tank and a receiving ship or a vessel comprising a second tank or a supply terminal and a delivery truck.

According to the invention a pneumatic emergency shutdown system is provided for a liquefied gas supply arrangement in which liquefied gas is supplied between a first tank and a second tank. The first tank and the second tank are distant from each other which means that they are in separate locations, for example the first tank is arranged in a ship and the second tank is arranged in a truck. The pneumatic emergency shutdown system comprises a pneumatic emergency shutdown circuit comprising pressure medium and provided in connection with the first tank. This means that the pneumatic emergency shutdown circuit is arranged to have a connection with the first tank such that the pneumatic emergency shutdown circuit provides information for a process control system that controls the processes relating to the first tank, for example unloading from the first tank and/or loading to the first tank, i.e. the process control system is a system relating to the first tank and advantageously a distributed control system working together with a safety instrumented system that controls together with the distributed control system critical interlocking of the processes relating to the first tank. The pneumatic emergency shutdown system further comprises a pneumatic emergency shutdown link provided to the pneumatic emergency shutdown circuit. The pneumatic emergency shutdown link connects the pneumatic emergency shutdown circuit to a pneumatic controlling system of the second tank. This means that the second tank comprises own pneumatic controlling system that is connected through the pneumatic emergency shutdown link to the pneumatic emergency shutdown circuit of the first tank.

The pneumatic emergency shutdown system further comprises a parking coupling provided to the pneumatic emergency shutdown circuit for receiving the pneumatic emergency shutdown link to a park position when the pneumatic emergency shutdown circuit is disconnected from the pneumatic controlling system of the second tank and a supply coupling provided in connection with the second tank for receiving the pneumatic emergency shutdown link to a supply position when the pneumatic emergency shutdown circuit is connected to the pneumatic controlling system of the second tank. The pneumatic emergency shutdown link connects the pneumatic emergency shutdown circuit in operation with the pneumatic controlling system of the second tank for feeding from the pneumatic controlling system of the second tank pressure to the pneumatic emergency shutdown circuit. When the tanks are not connected together, i.e. the pneumatic emergency shutdown circuit is not in connection with the pneumatic controlling system of the second tank the pneumatic emergency shutdown link is arranged in the parking position, i.e. in connection with the parking coupling such that the pneumatic emergency shutdown circuit comprises a first pressure when the pneumatic emergency shutdown circuit is a closed circuit. The first pressure is a normal pressure in the pneumatic emergency shutdown circuit when it is a closed circuit and the first pressure is for example around 2 bars. The first pressure is maintained through a pressure regulator.

The pneumatic emergency shutdown system further comprises a first valve provided to the pneumatic emergency shutdown circuit. The first valve is operable between an open position and a closed position in response for pressure change in the pneumatic emergency shutdown circuit for opening and closing the pneumatic emergency shutdown circuit. A pressure sensor is provided between the pneumatic emergency shutdown link and the first valve, the pressure sensor is operatively connected to the first valve for opening and closing the first valve in response to a pressure change in the pneumatic emergency shutdown circuit. A pressure regulator is provided between the first valve and the parking coupling for regulating the pressure in the pneumatic emergency shutdown circuit when the pneumatic emergency shutdown link is connected to the parking coupling, i.e. when the pneumatic emergency shutdown circuit is closed. The pneumatic emergency shutdown system further comprises a second valve provided between the first valve and the parking coupling for controlling the operating state of the pneumatic emergency shutdown system.

An advantage of the pneumatic emergency shutdown system of the invention is that it improves security of the person operating the loading or unloading process of the liquefied gas because the pneumatic emergency shutdown circuit is activated by connecting the pneumatic emergency shutdown link to the supply coupling such that a connection between the pneumatic emergency shutdown circuit and the pneumatic controlling system of the second tank is formed and only then the loading or unloading can be operated and if problems occur and there is a bleed in the system the circuit will be deactivated and the supply ends.

### BRIEF DESCRIPTION OF THE DRAWINGS

In the following the invention will be described in greater detail by means of preferred embodiments with reference to the attached drawings, in which
Figure 1 shows the pneumatic emergency shutdown system according to the invention in a first operation position; and
Figure 2 shows the pneumatic emergency shutdown system according to the invention in a second operation position.

### DETAILED DESCRIPTION OF THE INVENTION

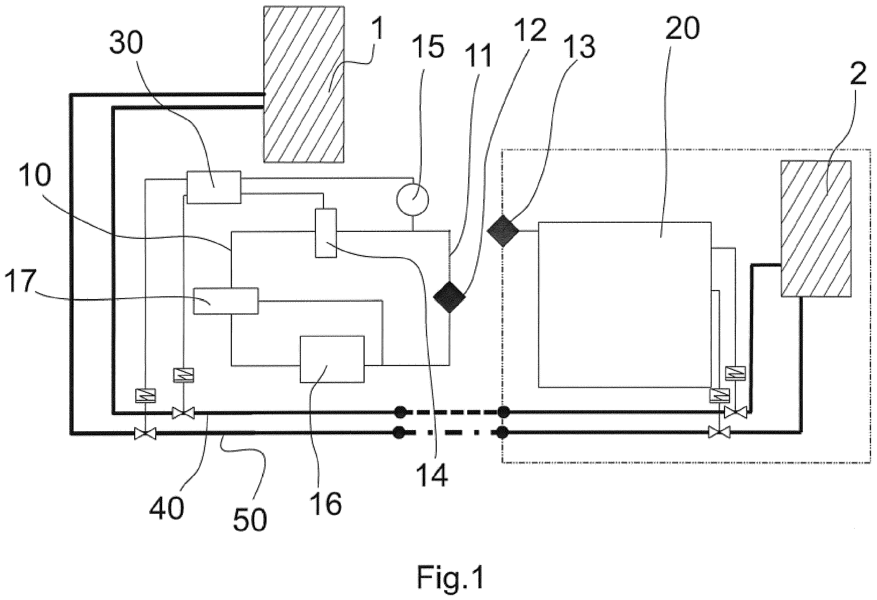

Figure 1 shows the pneumatic emergency shutdown system for a liquefied gas supply arrangement according to the invention in which liquefied gas is supplied between a first tank 1 and a second tank 2. The dashed line around the second tank 2 and the pneumatic controlling system 20 shows the range of the second tank 2 which means that for example in case of a trailer the dashed line illustrates the trailer comprising the second tank 2 and the pneumatic controlling system 20.

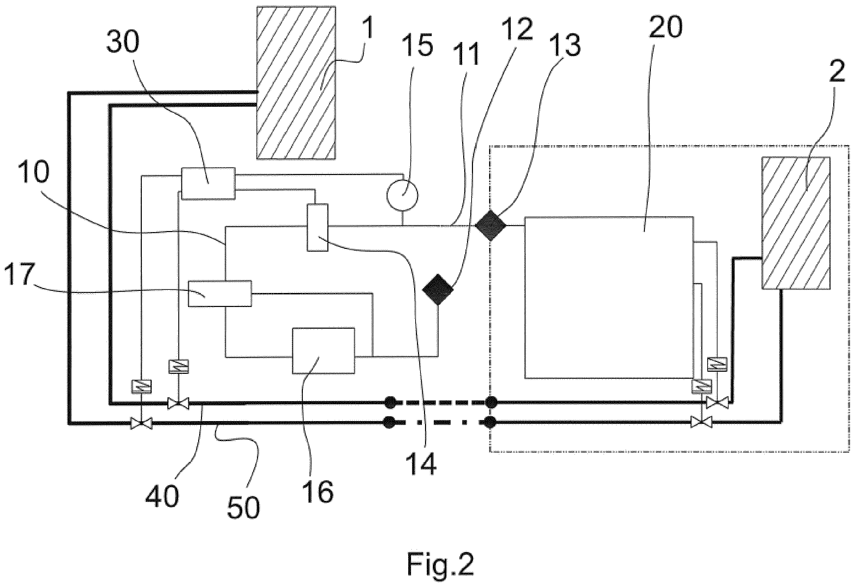

The pneumatic emergency shutdown system according to the invention comprises a pneumatic emergency shutdown circuit 10 comprising pressure medium and provided in connection with the first tank 1. A pneumatic emergency shutdown link 11 is provided to the pneumatic emergency shutdown circuit 10 and shown in figure 1 with a dotted line. The pneumatic emergency shutdown link 11 is arranged to connect the pneumatic emergency shutdown circuit 10 to a pneumatic controlling system of the second tank 2, but in figure 1 the connection is deactivated, i.e. there is no connection. In figure 2 the pneumatic emergency shutdown circuit 10 and the pneumatic controlling system 20 of the second tank 2 are connected.

A parking coupling 12 is provided to the pneumatic emergency shutdown circuit 10 for receiving the pneumatic emergency shutdown link 11 to a park position when the pneumatic emergency shutdown circuit 10 is disconnected from the pneumatic controlling system of the second tank 2. Figure 1 shows a supply coupling 13 provided in connection with the second tank 2 for receiving the pneumatic emergency shutdown link 11 to a supply position when the pneumatic emergency shutdown circuit 10 is connected to the pneumatic controlling system of the second tank 2.

A first valve 14 is provided to the pneumatic emergency shutdown circuit 10. The first valve 14 is operable between an open position and a closed position for opening and closing the pneumatic emergency shutdown circuit 10. A pressure sensor 15 is provided between the pneumatic emergency shutdown link 11 and the first valve 14, the pressure sensor 15 is operatively connected to the first valve 14 for opening and closing the first valve 14 in response to a pressure change in the pneumatic emergency shutdown circuit 10.

A pressure regulator 16 is provided between the first valve 14 and the parking coupling 12 for regulating the pressure in the pneumatic emergency shutdown circuit 10 when the pneumatic emergency shutdown link 11 is connected to the parking coupling 12 and a second valve 17 provided between the first valve 14 and the parking coupling 12 for controlling the operating state of the pneumatic emergency shutdown system. The pressure regulator 16 is arranged to regulate the pressure of the pneumatic emergency shutdown circuit 10. In other words the pressure regulator 16 is arranged to provide the first pressure to the pneumatic emergency shutdown circuit 10.

Figure 1 further shows that the pneumatic emergency shutdown circuit 10 comprises a connection to a process control system 30 through the pressure sensor 15 and the first valve 14 such that the pressure sensor 15 is arranged to transmit data of the pressure in the pneumatic emergency circuit 10 to the process control system 30 and said process control system 30 is arranged to provide command for the first valve 14 for opening or closing the pneumatic emergency shutdown circuit 10 in response to a pressure change in the pneumatic emergency shutdown circuit 10.

In figure 1 the pneumatic emergency shutdown circuit 10 is a closed circuit because the pneumatic emergency shutdown link 11 is in the parking position, i.e. the pneumatic emergency shutdown link 11 is connected with the parking coupling 12 and a first pressure is provided in the pneumatic emergency shutdown circuit 10. The pneumatic emergency shutdown link 11 is arranged to operate for activating and deactivating the pneumatic emergency shutdown circuit 10, i.e. when the pneumatic emergency shutdown link 11 is connected to the parking coupling 12 as in figure 1 the pneumatic emergency shutdown circuit 10 is deactivated and as shown figure 2 when the pneumatic emergency shutdown link 11 is connected to the supply coupling 13 the pneumatic emergency shutdown circuit is activated. When the pneumatic emergency shutdown circuit 10 is deactivated it comprises a first pressure which is maintained through the pressure regulator 16. The pneumatic emergency shutdown circuit 10 is activated by connecting the pneumatic emergency shutdown link 11 to the supply coupling 13 such that a connection between the pneumatic emergency shutdown circuit 10 and the pneumatic controlling system 20 of the second tank 2 is formed as shown in figure 2.

Figure 2 shows the same pneumatic emergency shutdown system as in figure 1 but now the pneumatic emergency shutdown circuit 10 of the first tank 1 is connected to the pneumatic controlling system 20 of the second tank 2 and said pneumatic emergency shutdown circuit 10 comprises a second pressure because the pneumatic emergency shutdown circuit 10 is an open circuit and connected to the pneumatic controlling system 20 having a different pressure than the first pressure. In other words the pneumatic emergency shutdown circuit 10 is an open circuit when the pneumatic emergency shutdown link 11 is in the supply position such that the pneumatic emergency shutdown link 11 is connected with the supply coupling 13 and a second pressure is provided in the pneumatic emergency shutdown circuit 10.

During operation of the pneumatic emergency shutdown circuit 10 the second pressure is greater than the first pressure and the first valve 14 is arranged to open in response to the pressure sensor 15 sensing pressure rising above or equalling with the first pressure and to close in response to the pressure sensor 15 sensing pressure decreasing below the first pressure. The first pressure is the pressure in which the pneumatic emergency shutdown circuit is in operation and the first valve 14 is open and is arranged to connect the second valve 17 and the emergency shutdown link 11. In other words the first pressure is a parking pressure because the emergency shutdown link 11 is in the parking position and the pneumatic emergency shutdown circuit is an open circuit. When the first valve is open the pressure stays in the circuit. When the circuit is released that is when the pressure drops below the first pressure, i.e. the parking pressure, the first valve 14 changes position, i.e. closes, and connection to atmospheric air opens and connection to the second valve 17 closes. In that case the emergency shutdown link 11 is depressurised to the atmosphere and the pressure drops in the pressure sensor 15 and in the pneumatic controlling system 20.

As shown in figures 1 and 2 the pressure regulator 16 is provided between the second valve 17 and the parking coupling 12. However the pneumatic emergency shutdown circuit 10 may comprise a branch line provided between the second valve 17 and the parking coupling 12 for overriding the pressure regulator 16.

In a preferred embodiment of the invention the pneumatic emergency shutdown system is arranged in connection with a ship such that the first tank 1 is the tank of the ship.

In another embodiment of the invention the pneumatic emergency shutdown system is arranged in connection with a loading/receiving terminal such that the first tank 1 is the tank of the loading/receiving terminal or the pneumatic emergency shutdown system is arranged in connection with a customer container. The loading/receiving terminal is for supplying and/or receiving the liquefied gas.

In a preferred embodiment of the invention the second tank 2 is in a truck or in a trailer or in a separate container.

In another embodiment of the invention there may be multiple pneumatic controlling systems of the second tanks such that for example when the second tank 2 is in a truck there may be multiple trucks each comprising a tank and a pneumatic controlling system 20 and the pneumatic controlling systems of each truck are connected together and one of the pneumatic systems of the second tank 2 is connected as a branch line to the pneumatic emergency shutdown circuit 10. In that case all the trucks can be loading the liquefied gas to the first tank 1 but still all the pneumatic controlling systems and the pneumatic emergency shutdown circuit are in connection with each other. If needed only the multiple second tanks 2 comprising the pneumatic controlling systems may be connected together if needed.

Next one example is provided of how a truck driver who is loading or unloading a truck comprising the second tank 2 operates within the pneumatic emergency shutdown system. The pneumatic emergency shutdown link 11 is connected to the parking coupling 12 and the pneumatic emergency shutdown circuit 10 comprises a first pressure which is preferably set for 2 - 3 bars. When the driver arrives to the loading/unloading place comprising the first tank 1 he armes the trailer's pneumatic controlling system 20 and then disconnects the pneumatic emergency shutdown link 11 from the parking coupling 12 of the pneumatic emergency shutdown circuit 10 and connects it to the supply coupling 13 which connects the pneumatic emergency shutdown circuit 10 in connection with the first tank 1 and the pneumatic controlling system 20 of the second tank 2. The driver must connect the pneumatic emergency shutdown link 11 to the supply coupling 13 after disconnecting it from the parking coupling 12 otherwise the pressure will slowly decrease in the pneumatic emergency shutdown circuit 10 and make an alarm so that the pressure sensor 15 senses the pressure change and activates preset-levels programmed to a process control system 30. After the driver has connected the pneumatic emergency shutdown link 11, the pneumatic controlling system 20 of the second tank 2 within the truck will pressurize the pneumatic emergency shutdown circuit 10 according the set level of the trailers own pressure set level. This is for example above 4 bars. The increased pressure is measured by the pressure sensor 15 in the pneumatic emergency shutdown circuit 10 and the data is transferred to the process control system 30 which understands that the trailer is connected to the pneumatic emergency shutdown circuit via the pneumatic emergency shutdown link 11 and the process control system 30 gives permission to start the loading/unloading process.

Figures 1 and 2 show that the liquefied gas is supplied through a liquefied gas line 40 between the first tank 1 and the second tank 2 and a vapor line 50 is provided for vapor returns between said first tank 1 and said second tank 2. The process control system 30 is connected to the liquefied gas line 40 and to the vapor line 50 through valves which operate according to the commands given from the process control system 30 for opening and closing said valves.

It will be obvious to a person skilled in the art that, as the technology advances, the inventive concept can be implemented in various ways. The invention and its embodiments are not limited to the examples described above but may vary within the scope of the claims.

## Claims

1. A pneumatic emergency shutdown system for a liquefied gas supply arrangement in which liquefied gas is supplied between a first tank (1) and a second tank (2), the pneumatic emergency shutdown system comprising
a pneumatic emergency shutdown circuit (10) comprising pressure medium and provided in connection with the first tank (1),
a pneumatic emergency shutdown link (11) provided to the pneumatic emergency shutdown circuit (10), said a pneumatic emergency shutdown link (11) connecting the pneumatic emergency shutdown circuit (10) to a pneumatic controlling system (20) of the second tank (2);
a parking coupling (12) provided to the pneumatic emergency shutdown circuit (10) for receiving the pneumatic emergency shutdown link (11) to a park position when the pneumatic emergency shutdown circuit (10) is disconnected from the pneumatic controlling system (20) of the second tank (2);
a supply coupling (13) provided in connection with the second tank (2) for receiving the pneumatic emergency shutdown link (11) to a supply position when the pneumatic emergency shutdown circuit (10) is connected to the pneumatic controlling system (20) of the second tank (2);
a first valve (14) provided to the pneumatic emergency shutdown circuit (10), said first valve (14) is operable between an open position and a closed position in response for pressure change in the pneumatic emergency shutdown circuit (10) for opening and closing the pneumatic emergency shutdown circuit (10);
a pressure sensor (15) provided between the pneumatic emergency shutdown link (11) and the first valve (14), the pressure sensor (15) is operatively connected to the first valve (14) for opening and closing the first valve (14) in response to a pressure change in the pneumatic emergency shutdown circuit (10);
a pressure regulator (16) provided between the first valve (14) and the parking coupling (12) for regulating the pressure in the pneumatic emergency shutdown circuit (10) when the pneumatic emergency shutdown link (11) is connected to the parking coupling (12); and
a second valve (17) provided between the first valve (14) and the parking coupling (12) for controlling the operating state of the pneumatic emergency shutdown system.

2. A pneumatic emergency shutdown system according to claim 1, **characterized in that** the pneumatic emergency shutdown circuit (10) comprises a connection to a process control system (30) through the pressure sensor (15) and the first valve (14) such that the pressure sensor (15) is arranged to transmit data of the pressure in the pneumatic emergency circuit (10) to the process control system (30) and said process control system (30) is arranged to provide command for the first valve (14) for opening or closing the pneumatic emergency shutdown circuit (10) in response to a pressure change in the pneumatic emergency shutdown circuit (10).

3. A pneumatic emergency shutdown system according to any preceding claim, **characterized in that** the pneumatic emergency shutdown circuit (10) comprises a first pressure when the pneumatic emergency shutdown circuit (10) is a closed circuit.

4. A pneumatic emergency shutdown system according to any preceding claim, **characterized in that** the pneumatic emergency shutdown circuit (10) is a closed circuit when the pneumatic emergency shutdown link (11) is in the parking position such that the pneumatic emergency shutdown link (11) is connected with the parking coupling (12) and a first pressure is provided in the pneumatic emergency shutdown circuit (10).

5. A pneumatic emergency shutdown system according to any preceding claim, **characterized in that** the pneumatic emergency shutdown circuit (10) comprises a second pressure when the pneumatic emergency shutdown circuit (10) is an open circuit.

6. A pneumatic emergency shutdown system according to any preceding claim, **characterized in that** the pneumatic emergency shutdown circuit (10) is an open circuit when the pneumatic emergency shutdown link (11) is in the supply position such that the pneumatic emergency shutdown link (11) is connected with the supply coupling (13) and a second pressure is provided in the pneumatic emergency shutdown circuit (10).

7. A pneumatic emergency shutdown system according to claims 3 - 6, **characterized in that** during operation of the pneumatic emergency shutdown circuit (10) the second pressure is greater than the first pressure and the first valve (14) is arranged to open in response to the pressure sensor (15) sensing pressure being equal or rising above the first pressure and to close in response to the pressure sensor (15) sensing pressure decreasing below the first pressure.

8. A pneumatic emergency shutdown system according to claim 3 or 4, **characterized in that** the pressure regulator (16) is arranged to provide the first pressure to the pneumatic emergency shutdown circuit (10).

9. A pneumatic emergency shutdown system according to any preceding claim, **characterized in that** the pressure regulator (16) is provided between the second valve (17) and the parking coupling (12).

10. A pneumatic emergency shutdown system according to any preceding claim, **characterized in that** pneumatic emergency shutdown circuit (10) comprises a branch line provided between the second valve (17) and the parking coupling (12) for overriding the pressure regulator (16).

11. A supply arrangement comprising a pneumatic emergency shutdown system according to any preceding claim, **characterized in that** the pneumatic emergency shutdown system is arranged in connection with a ship such that the first tank (1) is the tank of the ship.

12. A supply arrangement comprising a pneumatic emergency shutdown system according to any preceding claim, **characterized in that** the pneumatic emergency shutdown system is arranged in connection with a loading/receiving terminal such that the first tank (1) is the tank of the loading/receiving terminal.

13. A supply arrangement comprising a pneumatic emergency shutdown system according to any preceding claim, **characterized in that** the second tank (2) is in a truck or in a trailer or in a container.

## Patentansprüche

1. Pneumatisches Notabschaltsystem für eine Flüssiggaszufuhranordnung, bei der Flüssiggas zwischen einem ersten Tank (1) und einem zweiten Tank (2) zugeführt wird, wobei das pneumatische Notabschaltsystem Folgendes umfasst
eine pneumatische Notabschaltschaltung (10), die ein Druckmedium umfasst und in Verbindung mit dem ersten Tank (1) bereitgestellt ist,
einen pneumatischen Notabschaltlink (11), der zur pneumatischen Notabschaltschaltung (10) bereitgestellt ist, wobei der pneumatische Notabschaltlink (11) die pneumatische Notabschaltschaltung (10) mit einem pneumatischen Steuersystem (20) des zweiten Tanks (2) verbindet;
eine Parkkopplung (12), die an der pneumatischen Notabschaltschaltung (10) zum Aufnehmen des pneumatischen Notabschaltlinks (11) in einer Parkposition bereitgestellt ist, wenn die pneumatische Notabschaltschaltung (10) vom pneumatischen Steuersystem (20) des zweiten Tanks (2) getrennt ist;
eine Zufuhrkopplung (13), die in Verbindung mit dem zweiten Tank (2) zum Aufnehmen des pneumatischen Notabschaltlinks (11) in einer Zufuhrposition bereitgestellt ist, wenn die pneumatische Notabschaltschaltung (10) mit dem pneumatischen Steuersystem (20) des zweiten Tanks (2) verbunden ist;
ein erstes Ventil (14), das an der pneumatischen Notabschaltschaltung (10) bereitgestellt ist, wobei das erste Ventil (14) in Reaktion auf eine Druckänderung in der pneumatischen Notabschaltschaltung (10) zum Öffnen und Schließen der pneumatischen Notabschaltschaltung (10) zwischen einer offenen Position und einer geschlossenen Position betreibbar ist;
einen Drucksensor (15), der zwischen dem pneumatischen Notabschaltlink (11) und dem ersten Ventil (14) bereitgestellt ist, wobei der Drucksensor (15) zum Öffnen und Schließen des ersten Ventils (14) in Reaktion auf eine Druckänderung in der pneumatischen Notabschaltschaltung (10) mit dem ersten Ventil (14) wirkverbunden ist;
einen Druckregler (16), der zum Regeln des Drucks in der pneumatischen Notabschaltschaltung (10) zwischen dem ersten Ventil (14) und der Parkkopplung (12) bereitgestellt ist, wenn der pneumatische Notabschaltlink (11) mit der Parkkopplung (12) verbunden ist; und
ein zweites Ventil (17), das zum Steuern des Betriebsstatus des pneumatischen Notabschaltsystems zwischen dem ersten Ventil (14) und der Parkkopplung (12) bereitgestellt ist.

2. Pneumatisches Notabschaltsystem nach Anspruch 1, **dadurch gekennzeichnet, dass** die pneumatische Notabschaltschaltung (10) über den Drucksensor (15) und das erste Ventil (14) eine Verbindung zu einem Prozesssteuersystem (30) umfasst, derart, dass der Drucksensor (15) angeordnet ist, Daten des Drucks in der pneumatischen Notschaltung (10) zum Prozesssteuersystem (30) zu übertragen, und das Prozesssteuersystem (30) angeordnet ist, in Reaktion auf eine Druckänderung in der pneumatischen Notabschaltschaltung (10) dem ersten Ventil (14) zum Öffnen oder Schließen der pneumatischen Notabschaltschaltung (10) einen Befehl bereitzustellen.

3. Pneumatisches Notabschaltsystem nach einem der vorhergehenden Ansprüche, **dadurch gekennzeichnet, dass** die pneumatische Notabschaltschaltung (10) einen ersten Druck umfasst, wenn die pneumatische Notabschaltschaltung (10) eine geschlossene Schaltung ist.

4. Pneumatisches Notabschaltsystem nach einem der vorhergehenden Ansprüche, **dadurch gekennzeichnet, dass** die pneumatische Notabschaltschaltung (10) eine geschlossene Schaltung ist, wenn sich der pneumatische Notabschaltlink (11) in der Parkposition befindet, derart, dass der pneumatische Notabschaltlink (11) mit der Parkkopplung (12) verbunden ist und ein erster Druck in der pneumatischen Notabschaltschaltung (10) bereitgestellt ist.

5. Pneumatisches Notabschaltsystem nach einem der vorhergehenden Ansprüche, **dadurch gekennzeichnet, dass** die pneumatische Notabschaltschaltung (10) einen zweiten Druck umfasst, wenn die pneumatische Notabschaltschaltung (10) eine offene Schaltung ist.

6. Pneumatisches Notabschaltsystem nach einem der vorhergehenden Ansprüche, **dadurch gekennzeichnet, dass** die pneumatische Notabschaltschaltung (10) eine offene Schaltung ist, wenn sich der pneumatische Notabschaltlink (11) in der Zufuhrposition befindet, derart, dass der pneumatische Notabschaltlink (11) mit der Zufuhrkopplung (13) verbunden ist und ein zweiter Druck in der pneumatischen Notabschaltschaltung (10) bereitgestellt ist.

7. Pneumatisches Notabschaltsystem nach den Ansprüchen 3-6, **dadurch gekennzeichnet, dass** während des Betriebs der pneumatischen Notabschaltschaltung (10) der zweite Druck größer ist als der erste Druck und das erste Ventil (14) angeordnet ist, in Reaktion darauf, dass der Drucksensor (15) erfasst, dass der Druck mit dem ersten Druck gleich ist oder über diesen ansteigt, zu öffnen und in Reaktion darauf, dass der Drucksensor (15) erfasst, dass der Druck sich unter den ersten Druck verringert, zu schließen.

8. Pneumatisches Notabschaltsystem nach Anspruch 3 oder 4, **dadurch gekennzeichnet, dass** der Druckregler (16) angeordnet ist, der pneumatischen Notabschaltschaltung (10) den ersten Druck bereitzustellen.

9. Pneumatisches Notabschaltsystem nach einem der vorhergehenden Ansprüche, **dadurch gekennzeichnet, dass** der Druckregler (16) zwischen dem zweiten Ventil (17) und der Parkkopplung (12) bereitgestellt ist.

10. Pneumatisches Notabschaltsystem nach einem der vorhergehenden Ansprüche, **dadurch gekennzeichnet, dass** die pneumatische Notabschaltschaltung (10) eine Abzweigleitung umfasst, die zum Außerkraftsetzen des Druckreglers (16) zwischen dem zweiten Ventil (17) und der Parkkopplung (12) bereitgestellt ist.

11. Zufuhranordnung, die ein pneumatisches Notabschaltsystem nach einem der vorhergehenden Ansprüche umfasst, **dadurch gekennzeichnet, dass** das pneumatische Notabschaltsystem in Verbindung mit einem Schiff angeordnet ist, derart, dass der erste Tank (1) der Tank des Schiffs ist.

12. Zufuhranordnung, die ein pneumatisches Notabschaltsystem nach einem der vorhergehenden Ansprüche umfasst, **dadurch gekennzeichnet, dass** das pneumatische Notabschaltsystem in Verbindung mit einem Verlade-/Empfangsterminal angeordnet ist, derart, dass der erste Tank (1) der Tank des Verlade-/Empfangsterminals ist.

13. Zufuhranordnung, die ein pneumatisches Notabschaltsystem nach einem der vorhergehenden Ansprüche umfasst, **dadurch gekennzeichnet, dass** sich der zweite Tank (2) in einem Lkw oder in einem Anhänger oder in einem Container befindet.

## Revendications

1. Système pneumatique d'arrêt d'urgence pour un agencement d'alimentation en gaz liquéfié dans lequel le gaz liquéfié est alimenté entre un premier réservoir (1) et un second réservoir (2), le système pneumatique d'arrêt d'urgence comprenant :
un circuit pneumatique d'arrêt d'urgence (10) comprenant un moyen de pression et prévu en raccordement avec le premier réservoir (1),
une liaison pneumatique d'arrêt d'urgence (11) prévue sur le circuit pneumatique d'arrêt d'urgence (10), ladite liaison pneumatique d'arrêt d'urgence (11) raccordant le circuit pneumatique d'arrêt d'urgence (10) à un système de commande pneumatique (20) du second réservoir (2) ;
un couplage d'attente (12) prévu sur le circuit pneumatique d'arrêt d'urgence (10) pour recevoir la liaison pneumatique d'arrêt d'urgence (11) dans une position d'attente lorsque le circuit pneumatique d'arrêt d'urgence (10) est déconnecté du système de commande pneumatique (20) du second réservoir (2) ;
un couplage d'alimentation (13) prévu en raccordement avec la second réservoir (2) pour recevoir la liaison pneumatique d'arrêt d'urgence (11) dans une position d'alimentation lorsque le circuit pneumatique d'arrêt d'urgence (10) est raccordé au système de commande pneumatique (20) du second réservoir (2) ;
une première valve (14) prévue sur le circuit pneumatique d'arrêt d'urgence (10), ladite première valve (14) peut fonctionner entre une position ouverte et une position fermée en réponse au changement de pression dans le circuit pneumatique d'arrêt d'urgence (10) pour ouvrir et fermer le circuit pneumatique d'arrêt d'urgence (10) ;
un capteur de pression (15) prévu entre la liaison pneumatique d'arrêt d'urgence (11) et la première valve (14), le capteur de pression (15) est raccordé de manière opérationnelle à la première valve (14) pour ouvrir et fermer la première valve (14) en réponse à un changement de pression dans le circuit pneumatique d'arrêt d'urgence (10) ;
un régulateur de pression (16) prévu entre la première valve (14) et le couplage d'attente (12) pour réguler la pression dans le circuit pneumatique d'arrêt d'urgence (10) lorsque la liaison pneumatique d'arrêt d'urgence (11) est raccordée au couplage d'attente (12) ; et
une seconde valve (17) prévue entre la première valve (14) et le couplage d'attente (12) pour commander l'état de fonctionnement du système pneumatique d'arrêt d'urgence.

2. Système pneumatique d'arrêt d'urgence selon la revendication 1, **caractérisé en ce que** le circuit pneumatique d'arrêt d'urgence (10) comprend un raccordement à un système de commande de traitement (30) à travers le capteur de pression (15) et la première valve (14) de sorte que le capteur de pression (15) est agencé pour transmettre des données de pression dans le circuit pneumatique d'urgence (10) au système de commande de traitement (30) et ledit système de commande de traitement (30) est agencé pour fournir la commande pour la première valve (14) afin d'ouvrir ou de fermer le circuit pneumatique d'arrêt d'urgence (10) en réponse à un changement de pression dans le circuit pneumatique d'arrêt d'urgence (10).

3. Système pneumatique d'arrêt d'urgence selon l'une quelconque des revendications précédentes, **caractérisé en ce que** le circuit pneumatique d'arrêt d'urgence (10) comprend une première pression lorsque le circuit pneumatique d'arrêt d'urgence (10) est un circuit fermé.

4. Système pneumatique d'arrêt d'urgence selon l'une quelconque des revendications précédentes, **caractérisé en ce que** le circuit pneumatique d'arrêt d'urgence (10) est un circuit fermé lorsque la liaison pneumatique d'arrêt d'urgence (11) est dans la position d'attente de sorte que la liaison pneumatique d'arrêt d'urgence (11) est raccordée avec le couplage d'attente (12) et une première pression est prévue dans le circuit pneumatique d'arrêt d'urgence (10).

5. Système pneumatique d'arrêt d'urgence selon l'une quelconque des revendications précédentes, **caractérisé en ce que** le circuit pneumatique d'arrêt d'urgence (10) comprend une seconde pression lorsque le circuit pneumatique d'arrêt d'urgence (10) est un circuit ouvert.

6. Système pneumatique d'arrêt d'urgence selon l'une quelconque des revendications précédentes, **caractérisé en ce que** le circuit pneumatique d'arrêt d'urgence (10) est un circuit ouvert lorsque la liaison pneumatique d'arrêt d'urgence (11) est dans la position d'alimentation de sorte que la liaison pneumatique d'arrêt d'urgence (11) est raccordée au couplage d'alimentation (13) et une seconde pression est prévue dans le circuit pneumatique d'arrêt d'urgence (10).

7. Système pneumatique d'arrêt d'urgence selon les revendications 3 à 6, **caractérisé en ce que** pendant le fonctionnement du circuit pneumatique d'arrêt d'urgence (10), la seconde pression est supérieure à la première pression et la première valve (14) est agencée pour s'ouvrir en réponse au capteur de pression (15) détectant la pression qui est égale ou supérieure à la première pression et pour se fermer en réponse au capteur de pression (15) détectant la pression chutant sous la première pression.

8. Système pneumatique d'arrêt d'urgence selon la revendication 3 ou 4, **caractérisé en ce que** le régulateur de pression (16) est agencé pour fournir la première pression au circuit pneumatique d'arrêt d'urgence (10).

9. Système pneumatique d'arrêt d'urgence selon l'une quelconque des revendications précédentes, **caractérisé en ce que** le régulateur de pression (16) est prévu entre la seconde valve (17) et le couplage d'attente (12).

10. Système pneumatique d'arrêt d'urgence selon l'une quelconque des revendications précédentes, **caractérisé en ce que** le circuit pneumatique d'arrêt d'urgence (10) comprend une conduite de ramification prévue entre la seconde valve (17) et le couplage d'attente (12) pour outrepasser le régulateur de pression (16).

11. Agencement d'alimentation comprenant un système pneumatique d'arrêt d'urgence selon l'une quelconque des revendications précédentes, **caractérisé en ce que** le système pneumatique d'arrêt d'urgence est agencé en raccordement avec un bateau de sorte que le premier réservoir (1) est le réservoir du bateau.

12. Agencement d'alimentation comprenant un système pneumatique d'arrêt d'urgence selon l'une quelconque des revendications précédentes, **caractérisé en ce que** le système pneumatique d'arrêt d'urgence est agencé en raccordement avec un terminal de chargement / réception de sorte que le premier réservoir (1) est le réservoir du terminal de chargement / réception.

13. Agencement d'alimentation comprenant un système pneumatique d'arrêt d'urgence selon l'une quelconque des revendications précédentes, **caractérisé en ce que** le second réservoir (2) est dans un camion ou dans une remorque ou dans un conteneur.
